# EUROPÄISCHE PATENTSCHRIFT

(11) **EP 0 926 100 B1**
(45) Veröffentlichungstag und Bekanntmachung des Hinweises auf die Patenterteilung: **17.04.2002**
(21) Anmeldenummer: 98123786.0
(22) Anmeldetag: 15.12.1998
(51) Int. Cl.: C02F 1/66, C02F 9/00, C02F 1/26

(54) **Verfahren zur Reinigung von Abwässern aus einer Aldolisierungsreaktion mit nachfolgender Hydrierung**
Process for purification of waste waters from aldol condensation reaction with following hydrogenation
Procédé pour la purification d'eaux provenant de la réaction de condensation du type aldol suivie d'une hydrogénation

(30) Priorität: 24.12.1997 DE 19757904
(43) Veröffentlichungstag der Anmeldung: 30.06.1999
(73) Patentinhaber: Celanese Chemicals Europe GmbH, 60439 Frankfurt am Main (DE)
(72) Erfinder: Rötzheim, Mariola, 45481 Mühlheim (DE); Zgorzelski, Wolfgang, 46147 Oberhausen (DE)

(56) Entgegenhaltungen:
- EP-A- 0 631 988

## Beschreibung

Die Erfindung betrifft ein Verfahren zur Reinigung von Abwässern, die bei der Aldolisierung gleicher oder verschiedener Aldehyde oder Ketone oder bei der Mischaldolisierung von Aldehyden und Ketonen mit nachfolgender Hydrierung anfallen.

Unter dem Begriff der Aldolisierung werden im folgenden die Aldoladdition und Aldolkondensation zusammengefaßt. Als Aldoladdition bezeichnet man die durch Basen oder Säuren katalysierte Addition aktivierter Methylengruppen an die Carbonylgruppen von Aldehyden. oder Ketonen unter Bildung von β-Hydroxycarbonylverbindungen. Schließt sich der Aldoladdition eine Wasserabspaltung an, die leicht eintritt und die Regel bei der Verwendung saurer Katalysatoren ist, so spricht man von Aldolkondensation. Bei den Produkten der Aldolkondensation handelt es sich um α,β-ungesättigte Carbonylverbindungen.

Von besonderer Bedeutung ist die Aldolisierung von zwei Molekülen des gleichen Aldehyds oder des gleichen Ketons. Derartige Umsetzungen werden auch technisch genutzt. Ein Beispiel für die industrielle Anwendung ist die Herstellung von 2-Ethylhexanol, dem nach den niederen Alkoholen Methanol bis Butanol wichtigsten synthetischen Alkohol, durch Aldolisierung von n-Butyraldehyd und anschließende Hydrierung. Phthalsäureester des 2-Ethylhexanols finden in großem Umfang als Weichmacher für Kunststoffe Anwendung.

Zur Herstellung von Alkoholen unter Einbeziehung einer Aldolisierung werden zunächst Aldehyde als Ausgangsmaterial in Gegenwart wäßriger, basischer Lösungen in einer Aldolkondensation zu einem α,β-ungesättigten Aldehyd umgesetzt. Bei der Herstellung des zuvor genannten 2-Ethylhexanols wird somit n-Butyraldehyd beispielsweise unter Einwirkung von wäßriger Natriumhydroxidlösung zum 2-Ethylhexenal umgesetzt. Anschließend, wird die den α,β-ungesättigten Aldehyd enthaltende organische Phase von der katalysatorhaltigen, wäßrigen Phase abgetrennt. Die organische Phase wird daraufhin mit Wasser gewaschen und der α,β-ungesättigte Aldehyd zum gewünschten Alkohol, im Falle des 2-Ethylhexenals zum 2-Ethylhexanol, hydriert. Der so erhaltene Rohalkohol wird anschließend durch eine Destillation gereinigt. Der Rückstand dieser Destillation wird einer weiteren Wäsche mit Wasser unterzogen.

Im Verlauf der Aldolisierung sowie der anschließenden Hydrierung fallen somit drei verschiedene Abwasserfraktionen an. Es handelt sich hierbei
(1) um die katalysatorhaltige wäßrige Phase aus der Aldolisierungsreaktion,
(2) um das Waschwasser aus der Reinigung des in der Aldolisierung erhaltenen α,β-ungesättigten Aldehyds und
(3) um das Waschwasser aus der Reinigung des Rückstandes der Alkohol-Destillation.

Diese Abwasserfraktionen enthalten sowohl wasserlösliche als auch wasserunlösliche und daher emulgierte Nebenprodukte, die in den einzelnen Verfahrensstufen gebildet werden können, ferner nicht umgesetzte Edukte sowie sehr geringe Mengen der erhaltenen Produkte.

Bei den nicht umgesetzten Edukten handelt es sich um die Ausgangsaldehyde der Aldolisierung, wie z.B. n-Butyraldehyd, bei den erhaltenen Produkten um die α,β-ungesättigten Aldehyde der Aldolisierung sowie die nach Hydrierung hieraus gebildeten Alkohole. Diese Produkte liegen in der Geamtabwassermenge im Verhältnis zu den Nebenprodukten der Aldolisierung und Hydrierung nur in äußerst geringen Mengen vor. Im Fall der Aldolisierung von n-Butyraldehyd liegt z.B. das 2-Ethylhexenal mit maximal 0.2 Gew% vor, bezogen auf die Gesamtmenge aller im Abwasser vorhandehen organischen Verbindungen, d.h. der Summe aus nicht umgesetzten Edukten, Nebenprodukten aus Aldolisierung und Hydrierung sowie Produkten aus Aldolisierung und Hydrierung.
Bei den Nebenprodukten, die im Rahmen der Aldolisierung aus dem eingesetzten Aldehyd entstehen, handelt es sich vor allem um
- verzweigte Isomere des eingesetzten Aldehyds,
- geradkettige oder verzweigte Alkohole mit der gleichen C-Atom-Zahl wie der Aldehyd,
- geradkettige oder verzweigte Alkohole mit einem C-Atom mehr als der eingesetzte Aldehyd,
- cyclische Ester (Lactone) mit der gleichen C-Zahl wie der Aldehyd,
- als Salze, insbesondere Alkalisalze, vorliegende Carbonsäuren gleicher C-Zahl wie der Aldehyd sowie die entsprechenden freien Carbonsäuren,
- Aldehyde, die durch Hydrierung des α,β-ungesättigten Aldehyds aus der Aldolisierungsreaktion entstehen,
- cyclische Lactone und cyclische Diole mit 4 C-Atomen mehr als der gewünschte Alkohol aus Aldolisierung und nachfolgender Hydrierung,
- Carbonsäureester aus dem gewünschten Alkohol und der entsprechenden Carbonsäure sowie
- Carbonsäureester aus dem gewünschten Alkohol und der Carbonsäure mit der gleichen C-Atom-Zahl wie der Ausgangsaldehyd.

In minimaler Menge können als Nebenprodukte ferner
- verschieden verzweigte Alkohole, Aldehyde, Ether, Lactone und Säuren entweder mit ein oder zwei C-Atomen weniger oder 1-4 C-Atomen mehr als der gewünschte Alkohol aus Aldolisierung und nachfolgender Hydrierung
vorhanden sein.

Ferner kann das Abwasser auch Hydrierungsprodukte von Nebenprodukten aus der Aldolisierungsreaktion sowie höhersiedende Kondensationsprodukte enthalten.

Im Falle der Herstellung von 2-Ethylhexanol durch Aldolisierung von n-Butyraldehyd in Gegenwart von Natronlauge mit nachfolgender Hydrierung enthält das Gesamtabwasser beispielsweise: n-Butanal, i-Butanal, n-Butanol, i-Butanol, 2-Methylbutanol, n-Buttersäure, Natriumbutyrat, 4-Heptanol, 3-Methyl-4-heptanon, 3-Methyl-4-heptanol, 2-Ethyl-4-methyl-pentanal, 2-Ethyl-4-methylpentanol, 2-Ethylhexanal, 2-Ethylhexenal, 2-Ethyl-hex-3-enol, 2-Ethylhexanol, 2-Ethylhexylbutyrat, 2-Ethylhexyl-2-ethylhexanoat, 2-Ethylhexansäure, 2-Ethylhexan-diol-1,3, cyclisches C₁₂-Diol, cyclisches C₁₂-Lacton, cyclische gesättigte und ungesättigte C₁₂-Ether, C₁₀-Ether, n-Butyl-2-Ethylhexylether sowie trimeres n-Butanal.

Die Konzentration solcher organischer Verbindungen in wäßrigen Medien wird üblicherweise durch den CSB-Wert beschrieben. Der CSB-Wert (die Abkürzung CSB steht für den "chemischen Sauerstoffbedarf") ist die als Sauerstoff-Äquivalent ausgedrückte Menge Kaliumdichromat, die von den oxidierbaren Inhaltsstoffen eines Liters Wasser verbraucht wird. Die Bestimmung des CSB-Wertes erfolgt nach einer normierten Arbeitsweise, die z.B. in Ullmanns Enzyklopädie der technischen Chemie, 4. Auflage (1981), Bd. 6, Seiten 376 ff. beschrieben ist.

Ehe das Abwasser in konventionelle Reinigungsanlagen, in Flußläufe oder andere Vorfluter eingeleitet werden kann, muß sein Gehalt an organischen Verunreinigungen deutlich gesenkt werden, um den strengen Anforderungen des Gesetzgebers hinsichtlich der maximalen Schadstoffkonzentrationen in Abwässern zu genügen.

Aus der EP-A-0 631 988 ist ein Verfahren bekannt, mit dessen Hilfe die Konzentration organischer Verunreinigungen in den Abwässern aus Aldolisierungen und nachfolgenden Hydrierreaktionen erheblich herabgesetzt werden kann.

Bei diesem Verfahren werden die zuvor beschriebenen drei Abwasserfraktionen vereinigt und auf einen pH-Wert von 0-6 eingestellt. Eine sich daraufhin abscheidende organische Phase trennt man gegebenenfalls ab und extrahiert das Abwasser anschließend mit Monoalkoholen, die 8 oder mehr Kohlenstoffatome im Molekül enthalten und/oder mit Kohlenwasserstoffen, die mehr als 6 Kohlenstoffatome im Molekül enthalten.

Das Verfahren ist technisch einfach durchzuführen und ermöglicht es, mindestens 90 % der im vereinigten Abwasser enthaltenen organischen Verbindungen abzutrennen.

Das nach der Extraktion vorliegende, mit den organischen Verbindungen und Nebenprodukten beladene Extraktionsmittel wird in der Praxis zur Rückgewinnung einer Destillation unterworfen. Der hierbei anfallende Destillationsrückstand sowie eine am Kopf der Destillationskolonne abgenommene Fraktion enthalten einen großen Teil der organischen Nebenprodukte und werden der thermischen Verwertung zugeführt. Das über einen Seitenabzug wiedergewonnene Extraktionsmittel wird unter Ergänzung von frischem Extraktionsmittel in den Extraktionsvorgang rezirkuliert.

Ein wichtiger Aspekt des Verfahrens gemäß EP-A-0 631 988 ist es, die im allgemeinen alkalischen Abwässer auf einen pH-Wert von 0-6, insbesondere von 1-3 einzustellen. Hierdurch werden beispielsweise die als wasserlösliche Alkalisalze vorliegenden Carbonsäuren protoniert und somit in die freien Carbonsäuren umgewandelt. Diese freien Säuren sind wasserunlösliche Stoffe. Es kommt somit zur mehr oder weniger ausgeprägten Ausbildung einer organischen Phase, die vom Abwasser abgetrennt wird, wodurch bereits eine gewisse Verringerung des CSB-Wertes erzielt werden kann. Die Einstellung des genannten pH-Wertes hat auch zur Folge, daß die Löslichkeit des Extraktionsmittels im Wasser weiter herabgesetzt wird. Es hat sich nämlich gezeigt, daß die Löslichkeit der Extraktionsmittel im Wasser vom pH-Wert abhängt und in sauren Medien deutlich geringer ist als in alkalischen. Sie tragen daher in sauren Lösungen nur geringfügig zur Erhöhung des CSB-Wertes bei.

Trotz der Verringerung des pH-Wertes mit nachfolgender Abtrennung der dabei gebildeten organischen Phase enthält das Abwasser im Verfahren der EP-A-0 631 988 neben den gelösten wasserlöslichen, organischen Verbindungen immer noch eine gewisse Menge an wasserunlöslichen, im Abwasser emulgierten organischen Verbindungen. Diese Substanzen können somit erst in dem der pH-Wert-Einstellung nachfolgenden Schritt der Extraktion aus dem Abwasser entfernt werden. Da auch höhermolekulare Verbindungen und hochsiedende Kondensationsprodukte durch die Extraktion entfernt werden, müssen bei der Destillation des mit diesen Verunreinigungen beladenen Extraktionsmittels hohe Temperaturen eingesetzt werden, was unerwünschterweise wiederum zu einer verstärkten Bildung hochsiedender Kondensationsprodukte im Destillationssumpf führt. Um die Destillationstemperatur nicht laufend erhöhen zu müssen, werden in der Praxis stetig größere Mengen des Destillationssumpfes aus dem Destillationsreaktor abgezogen, wodurch jedoch jedes Mal auch 2-Ethylhexanol mitentfernt wird und somit für die Rezirkulierung verloren geht. Dies bedingt, daß das nach der Destillation rezirkulierte 2-Ethylhexanol stetig durch frisches 2-Ethylhexanol ergänzt werden muß.

Aufgabe der vorliegenden Erfindung war es daher, ein verbessertes Verfahren zur Reinigung von Abwässern aus einer Aldolisierung und nachgeschalteter Hydrierung zur Verfügung zu stellen, daß eine effektivere Rückgewinnung des Extraktionsmittels erlaubt.

Gelöst wird diese Aufgabe durch ein Verfahren zur Reinigung von Abwässern aus der Herstellung von Alkoholen, welche eine Aldolisierungsreaktion, eine nachfolgende Hydrierung sowie eine abschließende Destillation des Alkohols umfaßt, wobei diese Abwässer drei Fraktionen aufweisen,
(1) die katalysatorhaltige wäßrige Phase aus der Aldolisierungsreaktion,
(2) das Waschwasser aus der Reinigung des in der Aldolisierung erhaltenen α,β-ungesättigten Aldehyds und
(3) das Waschwasser aus der Reinigung des Rückstandes der Alkohol-Destillation,
und man die vereinigten Abwasserfraktionen mit Monoalkoholen, die 8-16 Kohlenstoffatome im Molekül enthalten und/oder mit Kohlenwasserstoffen, die 6-12 Kohlenstoffatome im Molekül enthalten, extrahiert,
dadurch gekennzeichnet, daß
(a) zunächst mindestens zwei der drei Abwasserfraktionen vereinigt und auf einen pH-Wert von 0-6 eingestellt werden und die sich dabei bildende organische Phase gegebenenfalls abgetrennt wird und
(b) im Laufe des Verfahrens eine oder mehrere der drei Abwasserfraktionen einzeln und/oder gemeinsam mit einem Koalisierfilter in Kontakt gebracht wird und schließlich
(c) alle drei Abwasserfraktionen vereint der Extraktion unterworfen werden.

Bei den im erfindungsgemäßen Verfahren eingesetzten Abwässern aus der Herstellung von Alkoholen, welche eine Aldolisierungsreaktion, eine nachfolgende Hydrierung sowie eine abschließende Destillation des Alkohols umfaßt, handelt es sich um die drei Abwasserfraktionen (1),(2) und (3), welche die zuvor bereits detailliert genannten wasserlöslichen und wasserunlöslichen organischen Verbindungen enthalten können.

Bei den im erfindungsgemäßen Verfahren eingesetzten Koalisierfiltern handelt es sich um flüssig/flüssig Phasentrenner zur Feinsttropfenabscheidung, bei denen die physikalische Wirkung der Koaleszenz in speziell aufgebauten, zylindrischen Faserbett-Elementen ausgenutzt wird. Derartige Koalisierfilter sind aus dem Stand der Technik bekannt (siehe beispielsweise Chemie-Technik, 18 (1989), 14-21). Sie bestehen z.B. aus Kunststofffasern aus Polypropylen oder Polytetrafluorethylen oder aus Glas- oder Metallfasern. Zur Durchströmung des Faserbettes ist ein treibender Differenzdruck von ca. 0.1 bar erforderlich.

Bei der Durchströmung des Faserbettes des Koalisierfilters vereinigen sich die im Abwasser fein dispergierten wasserunlöslichen, organischen Verbindungen, oder sie werden durch eine bereits am Faserbett vorhandene organische Grenzschicht eingefangen und bilden einen benetzenden Film. Mit dem treibenden Strom des Abwassers wandert dieser Film zum Austritt des Faserbetts, wo sich dann periodisch große Tropfen der organischen Phase abtrennen und alleine aufgrund der Schwerkraft abscheiden. Diese organische Phase kann wiederum vom Abwasser abgetrennt werden. Hieraus resultiert, daß das in die nachfolgende Extraktion eintretende Abwasser einen niedrigeren CSB-Wert hat. Somit muß in der Extraktion nur eine geringere Menge an organischen Verbindungen aus dem Abwasser entfernt werden. Das die Extraktion verlassende Extraktionsmittel ist daher nur mit einer geringeren Menge an organischen Verbindungen beladen, entsprechend sind auch die im Destillationsreaktor notwendigen Temperaturen zur Wiedergewinnung des Extraktionsmittels geringer. Hierdurch verringert sich die Bildung weiterer höhersiedender Nebenprodukte bei der destillativen Aufarbeitung des gebrauchten Extraktionsmittels deutlich. Entsprechend müssen auch nur geringe Mengen des Destillationssumpfes laufend abgeführt werden, wodurch der Verlust des Extraktionsmittels während der Aufarbeitung deutlich geringer ist als im Fall des Verfahrens gemäß EP-A- 631 988, wenn kein Koalisierfilter eingesetzt wird. Dies zieht den Vorteil nach sich, daß nach der destillativen Aufarbeitung des Extraktionsmittels auch nur deutlich geringere Mengen an frischem Extraktionsmittel zudosiert werden müssen.

Durch die Zwischenschaltung eines Koalisierfilters wird im erfindungsgemäßen Verfahren eine mit vielschichtigen positiven Wirkungen verbundene Ausgestaltung zur Verbesserung der Abwasserreinigung zur Verfügung gestellt. Ein weiterer Vorteil des erfindungsgemäßen Verfahrens liegt darin begründet, daß die Koalisierfilter für eine kontinuierliche Betriebsweise geeignet sind,und das Gesamtverfahren zur Reinigung der Abwässer auch kontinuierlich im Anschluß an die Aldolisierungs- und Hydrierungsreaktion durchgeführt werden kann.

Für das erfindungsgemäße Verfahren haben sich verschiedene Ausführungsformen besonders bewährt. Die Ausführungsform A1 ist dadurch gekennzeichnet, daß zunächst die Abwasserfraktionen (1) und (3) gemäß Schritt (a) miteinander vereinigt, auf einen pH-Wert von 0-6, bevorzugt 1-3, eingestellt und gegebenenfalls von der sich bildenden organischen Phase befreit werden, und anschließend das dabei zurückbleibende Abwasser mit der Abwasserfraktion (2) vereinigt, gemeinsam durch einen Koalisierfilter geführt und dann der Extraktion unterworfen wird.

Eine Ausführungsform A2 ist dadurch gekennzeichnet, daß wiederum zunächst die Abwasserfraktionen (1) und (3) gemäß Schritt (a) miteinander vereinigt, auf einen pH-Wert von 0-6, bevorzugt 1-3, eingestellt und gegebenenfalls von der sich bildenden organischen Phase befreit werden, und das dabei zurückbleibende Abwasser anschließend mit der bereits durch einen Koalisierfilter geführten Abwasserfraktion (2) vereinigt und der Extraktion zugeführt wird.

In der Ausführungsform A3 werden zunächst die Abwasserfraktionen (1) und (3) gemäß Schritt (a) miteinander vereinigt, auf einen pH-Wert von 0-6, bevorzugt 1-3, eingestellt, gegebenenfalls von der sich bildenden organischen Phase befreit und durch einen Koalisierfilter geführt. Anschließend wird das verbleibende Abwasser mit der ebenfalls bereits durch einen Koalisierfilter geführten Abwasserfraktion (2) vereinigt und der Extraktion zugeführt.

Eine weitere Ausführungsform A4 zeichnet sich dadurch aus, daß alle drei Abwasserfraktionen (1),(2) und (3) zunächst vereinigt, auf den pH-Wert von 0-6, bevorzugt 1-3, eingestellt und gegebenenfalls von der sich bildenden organischen Phase befreit werden, sowie anschließend gemeinsam durch einen Koalisierfilter geführt und der Extraktion unterworfen werden.

Zur Einstellung des pH-Wertes des Abwassers verwendet man anorganische Säuren wie Salzsäure, Schwefelsäure, Salpetersäure oder Phosphorsäure, bevorzugt ist Schwefelsäure.

Da die Ablagerung von Feststoffpartikeln im Faserbett des Koalisierfilters zu einer Beeinträchtigung der Abscheideleistung führt, kann es sinnvoll sein, vor den Koalisierfilter eine geeignete Filterstufe zur Abtrennung von Feststoffpartikelchen zu schalten.

Als Extraktionsmittel werden im erfindungsgemäßen Verfahren Alkohole mit 8 -16 Kohlenstoffatomen im Molekül eingesetzt. Sie können geradkettig oder verzweigt, gesättigt oder ungesättigt sein. Es ist nicht erforderlich, reine Alkohole zu verwenden. Geeignet sind auch Gemische aus isomeren Alkoholen oder aus Alkoholen unterschiedlicher Molekülgröße. Bewährt haben sich 2-Ethylhexanol, 3,5,5-Trimethylhexanol, Isooctanol, Nonanole, Decanole und Isodecanole sowie die Gemische der isomeren Octanole, Nonanole und Decanole.

Neben den Alkoholen können auch Kohlenwasserstoffe mit 6-12 Kohlenstoffatomen im Molekül als Extraktionsmittel verwendet werden. Auch die Kohlenwasserstoffe können geradkettig oder verzweigt, gesättigt oder ungesättigt sein. Besonders bewährt haben sich Gemische unterschiedlicher Kohlenwasserstoffe, die als leicht siedende Fraktionen bei der Destillation von Erdöl anfallen, insbesondere leichtes Heizöl.

Außer Alkoholgemischen oder Gemischen unterschiedlicher Kohlenwasserstoffe können auch Gemische aus Alkoholen und Kohlenwasserstoffen zur Extraktion der organischen Verbindungen aus dem Abwasser eingesetzt werden. Das Mischungsverhältnis kann sich über einen weiten Bereich erstrecken und wird vor allem durch die Mischbarkeit der Komponenten begrenzt. Die erfindungsgemäß eingesetzten Alkohole und/oder Kohlenwasserstoffe haben sich als ausgezeichnete Extraktionsmittel für die in den genannten Abwässer üblicherweise enthalten organischen Substanzen erwiesen. Bedeutsam ist ferner, daß sie von der Wasserphase nur in sehr geringen Mengen gelöst werden.

Die Extraktion der organischen Verbindungen aus den Abwässern nach dem erfindungsgemäßen Verfahren erfolgt in den für die Solventextraktion üblichen Vorrichtungen. Bewährt haben sich Extraktoren, die einstufig oder mehrstufig als Extraktionsbatterien aus mehreren hintereinandergeschalteten Mischer-Scheider-Paaren ausgestaltet sind. Ebenso können Extraktionskolonnen mit ruhenden Einbauten, wie Füllkörperkolonnen, oder mit bewegten Einbauten, wie Rührkolonnen, verwendet werden, wobei Extraktionsmittel und Trägerflüssigkeit im Gleichstrom oder bevorzugt im Gegenstrom geführt werden.

Das Extraktionsmittel läßt sich in einfacher Weise durch Destillation regenerieren und kann daher wiederholt eingesetzt werden. Der Destillationsrückstand sowie der Kopfabzug der Destillationskolonne enthalten die abzutrennenden organischen Verbindungen und werden der thermischen Verwertung zugeführt, während das Extraktionsmittel über einen Seitenabzug der Kolonne wiedergewonnen und in den Extraktionsprozeß recycliert wird.

Das neue Verfahren eignet sich zur Aufarbeitung von Abwässern der Aldolisierungsreaktion und nachgeschalteten Hydrierung, unabhängig vom angewandten Aldolisierungsverfahren und den eingesetzten Ausgangsstoffen. Die Aldolisierung kann also z.B. mit Alkalihydroxid, Alkalicarbonat oder Aminen als Kataysatoren und mit Aldehyden oder Ketonen durchgeführt worden sein.

## Patentansprüche

1. Verfahren zur Reinigung von Abwässern aus der Herstellung von Alkoholen, welche eine Aldolisierungsreaktion und eine nachfolgende Hydrierung umfaßt, wobei diese Abwässer drei Fraktionen umfassen,
(1) die katalysatorhaltige wäßrige Phase aus der Aldolisierungsreaktion,
(2) das Waschwasser aus der Reinigung des in der Aldolisierung erhaltenen α,β-ungesättigten Aldehyds und
(3) das Waschwasser aus der Reinigung des Rückstandes der Alkohol-Destillation,
und man die Abwässer mit Monoalkoholen, die 8-16 Kohlenstoffatome im Molekül enthalten, und/oder mit Kohlenwasserstoffen, die 6-12 Kohlenstoffatome im Molekül enthalten, extrahiert,
**dadurch gekennzeichnet, daß**
(a) zunächst mindestens zwei der drei Abwasserfraktionen vereinigt und auf einen pH-Wert von 0-6, bevorzugt 1-3, eingestellt werden und die sich dabei bildende organische Phase gegebenenfalls abgetrennt wird und
(b) im Laufe des Verfahrens eine oder mehrere der drei Abwasserfraktionen einzeln und/oder gemeinsam mit einem Koalisierfilter in Kontakt gebracht wird und schließlich
(c) alle drei Abwasserfraktionen vereint der Extraktion unterworfen werden.

2. Verfahren nach Anspruch 1, **dadurch gekennzeichnet, daß** zunächst die Abwasserfraktionen (1) und (3) gemäß Schritt (a) miteinander vereinigt, auf einen pH-Wert von 0-6, bevorzugt 1-3, eingestellt und gegebenenfalls von der sich bildenden organischen Phase befreit werden, und das dabei zurückbleibende Abwasser anschließend mit der Abwasserfraktion (2) vereinigt, gemeinsam durch einen Koalisierfilter geführt und dann der Extraktion unterworfen wird.

3. Verfahren nach Anspruch 1, **dadurch gekennzeichnet, daß** zunächst die Abwasserfraktionen (1) und (3) gemäß Schritt (a) miteinander vereinigt, auf einen pH-Wert von 0-6, bevorzugt 1-3, eingestellt und gegebenenfalls von der sich bildenden organischen Phase befreit werden, und das dabei zurückbleibende Abwasser anschließend mit der bereits durch einen Koalisierfilter geführten Abwasserfraktion (2) vereinigt und der Extraktion zugeführt wird.

4. Verfahren nach Anspruch 1, **dadurch gekennzeichnet, daß** zunächst die Abwasserfraktionen (1) und (3) gemäß Schritt (a) miteinander vereinigt, auf einen pH-Wert von 0-6, bevorzugt 1-3, eingestellt, gegebenenfalls von der sich bildenden organischen Phase befreit und durch einen Koalisierfilter geführt werden, und das dabei zurückbleibende Abwasser anschließend mit der ebenfalls bereits durch einen Koalisierfilter geführten Abwasserfraktion (2) vereinigt und der Extraktion zugeführt wird.

5. Verfahren nach Anspruch 1, **dadurch gekennzeichnet, daß** alle drei Abwasserfraktionen (1),(2) und (3) zu nächst vereinigt, auf den pH-Wert von 0-6, bevorzugt 1-3, eingestellt und gegebenenfalls von der sich bildenden organischen Phase befreit werden, anschließend gemeinsam durch einen Koalisierfilter geführt und der Extraktion unterworfen werden.

6. Verfahren nach einem der Ansprüche 1-5, **dadurch gekennzeichnet daß** die Einstellung des pH-Wertes mit Salzsäure, Schwefelsäure, Salpetersäure oder Phosphorsäure durchgeführt wird.

## Claims

1. A process for cleaning up wastewaters from the preparation of alcohols, which preparation comprises an aldolization reaction and a following hydrogenation, these wastewaters having three fractions,
(1) the catalyst-containing aqueous phase from the aldolization reaction,
(2) the washwater from the purification of the α,β-unsaturated aldehyde produced in the aldolization and
(3) the washwater from the cleanup of the alcohol distillation residue,
and the wastewaters being extracted with monohydric alcohols which contain 8-16 carbon atoms in the molecule and/or with hydrocarbons which contain 6-12 carbon atoms in the molecule, which comprises
(a) upstream of the extraction, first combining at least two of the three wastewater fractions and adjusting them to a pH of 0-6, preferably 1-3, and if appropriate removing the organic phase forming during this and
(b) in the course of the process, bringing one or more of the three wastewater fractions individually and/or collectively into contact with a coalescing filter, and finally
(c) combining all three wastewater fractions and the mixture is subjected to the extraction.

2. The process as claimed in claim 1, wherein the wastewater fractions (1) and (3) are firstly combined with one another according to step (a), adjusted to a pH of 0-6, preferably 1-3, and if appropriate freed from the organic phase which forms, and the remaining wastewater is then combined with the wastewater fraction (2), the mixture is collectively conducted through a coalescing filter and then subjected to the extraction.

3. The process as claimed in claim 1, wherein the wastewater fractions (1) and (3) are firstly combined with one another according to step (a), adjusted to a pH of 0-6, preferably 1-3, and if appropriate freed from the orgnaic phase which formed, and the remaining wastewater is then combined with the wastewater fraction (2) which has already been passed through a coalescing filter and the mixture is fed to the extraction.

4. The process as claimed in claim 1, wherein the wastewater fractions (1) and (3) are firstly combined with one another according to step (a), adjusted to a pH of 0-6, preferably 1-3, if appropriate freed from the organic phase which forms and conducted through a coalescing filter, and the remaining wastewater is then combined with the wastewater fraction (2) which has likewise already been passed through a coalescing filter and the mixture is fed to the extraction.

5. The process as claimed in claim 1, wherein all three wastewater fractions (1), (2) and (3) are firstly combined, adjusted to the pH of 0-6, preferably 1-3, and if appropriate freed from the organic phase which forms, then the mixture is collectively conducted through a coalescing filter and subjected to the extraction.

6. The process as claimed in one of claims 1-5, wherein the pH is adjusted by hydrochloric acid, sulfuric acid, nitric acid or phosphoric acid.

## Revendications

1. Procédé de purification d'eaux résiduaires provenant d'une préparation d'alcools comprenant une réaction d'aldolisation suivie d'une hydrogénation, dans lequel ces eaux résiduaires présentent trois fractions:
(1) la phase aqueuse contenant le catalyseur de la réaction d'aldolisation,
(2) l'eau de lavage issue de la purification de l'aldéhyde α,β-insaturé obtenu dans l'aldolisation, et
(3) l'eau de lavage issue de la purification du résidu de la distillation de l'alcool, et on extrait les eaux résiduaires avec des monoalcools contenant 8 à 16 atomes de carbone dans la molécule et/ou avec des hydrocarbures contenant 6 à 12 atomes de carbone dans la molécule,
**caractérisé en ce que**
(a) on réunit d'abord au moins deux des trois fractions d'eaux résiduaires, on les amène à un pH de 0-6, de préférence de 1-3, et on sépare éventuellement la phase organique formée dans ces conditions, et
(b) on met en contact au cours du procédé une ou plusieurs des trois fractions d'eaux résiduaires, isolément et/ou ensemble, avec un filtre coalescent, et finalement
(c) on soumet les trois fractions d'eaux résiduaires réunies à l'extraction.

2. Procédé selon la revendication 1, **caractérisé en ce que** l'on réunit d'abord les fractions d'eaux résiduaires (1) et (3) selon l'étape (a), on les amène à un pH de 0-6, de préférence de 1-3, et on sépare éventuellement la phase organique formée, puis on mélange les eaux résiduaires restantes avec la fraction d'eaux résiduaires (2), on les fait passer ensemble à travers un filtre coalescent, puis on les soumet à l'extraction.

3. Procédé selon la revendication 1, **caractérisé en ce que** l'on réunit d'abord les fractions d'eaux résiduaires (1) et (3) selon l'étape (a), on les amène à un pH de 0-6, de préférence de 1-3, et on sépare éventuellement la phase organique formée, on mélange ensuite les eaux résiduaires restantes avec la fraction d'eaux résiduaires (2) déjà passée à travers un filtre coalescent, et on les soumet à l'extraction.

4. Procédé selon la revendication 1, **caractérisé en ce que** l'on réunit d'abord les fractions d'eaux résiduaires (1) et (3) selon l'étape (a), on les amène à un pH de 0-6, de préférence de 1-3, on sépare éventuellement la phase organique formée, et on les fait passer à travers un filtre coalescent, puis on mélange les eaux résiduaires restantes avec la fraction d'eaux résiduaires (2) déjà passée à travers un filtre coalescent et on les soumet à l'extraction.

5. Procédé selon la revendication 1, **caractérisé en ce que** l'on réunit d'abord les trois fractions d'eaux résiduaires (1), (2) et (3), on les amène à un pH de 0-6, de préférence de 1-3, et on sépare éventuellement la phase organique formée, puis on les fait passer ensemble à travers un filtre coalescent et on les soumet à l'extraction.

6. Procédé selon l'une des revendications 1 à 5, **caractérisé en ce que** le réglage du pH s'effectue avec de l'acide chlorhydrique, de l'acide sulfurique, de l'acide nitrique ou de l'acide phosphorique.
